# EUROPÄISCHE PATENTSCHRIFT

(11) **EP 1 131 281 B1**
(45) Veröffentlichungstag und Bekanntmachung des Hinweises auf die Patenterteilung: **27.07.2005**
(21) Anmeldenummer: 99962063.6
(22) Anmeldetag: 17.11.1999
(51) Int. Cl.: C07C 237/10, C07C 275/14, C12Q 1/68

(54) **DERIVATISIERUNG VON TRÄGEROBERFLÄCHEN**
DERIVATISATION OF SUPPORT SURFACES
DERIVATION DE SURFACES DE PORTEURS

(30) Priorität: 18.11.1998 DE 19853242
(43) Veröffentlichungstag der Anmeldung: 12.09.2001
(73) Patentinhaber: Deutsches Krebsforschungszentrum Stiftung des öffentlichen Rechts, 69120 Heidelberg (DE)
(72) Erfinder: BEIER, Markus, D-69120 Heidelberg (DE)
(74) Vertreter: Schüssler, Andrea, Dr.
(86) Internationale Anmeldenummer: PCT/DE1999/003692
(87) Internationale Veröffentlichungsnummer: WO 2000/029373

(56) Entgegenhaltungen:
- WO-A-00/02656
- US-A- 4 837 348
- US-A- 5 624 711
- TSUBOKAWA N ET AL: "Grafting of 'dendrimer-like' highly branched polymer onto ultrafine silica surface" REACTIVE & FUNCTIONAL POLYMERS,NL,ELSEVIER SCIENCE PUBLISHERS BV, Bd. 37, Nr. 1-3, 1. Juni 1998 (1998-06-01), Seiten 75-82, XP004127869 ISSN: 1381-5148
- TAM J P: "SYNTHETIC PEPTIDE VACCINE DESIGN: SYNTHESIS AND PROPERTIES OF A HIGH-DENSITY MULTIPLE ANTIGENIC PEPTIDE SYSTEM" PROCEEDINGS OF THE NATIONAL ACADEMY OF SCIENCES OF USA,US,NATIONAL ACADEMY OF SCIENCE. WASHINGTON, Bd. 85, 1. August 1988 (1988-08-01), Seiten 5409-5413, XP002070407 ISSN: 0027-8424
- TERRETT N K ET AL: "COMBINATIONRIAL SYNTHESIS - THE DESIGN OF COMPOUND LIBRARIES AND THEIR APPLICATION TO DRUG DISCOVERY" TETRAHEDRON,NL,ELSEVIER SCIENCE PUBLISHERS, AMSTERDAM, Bd. 51, Nr. 30, 24. Juli 1995 (1995-07-24), Seiten 8135-8173, XP000644580 ISSN: 0040-4020
- TSUBOKAWA N ET AL: "SURFACE-GRAFTING ONTO ARAMID POWDER: REACTION OF ACYL CHLORIDE GROUPS ON THE SURACE WITH FUNCTIONAL POLYMERS HAVING TERMINAL HYDROXYL OR AMINO GROUPS" POLYMERS FOR ADVANCED TECHNOLOGIES,GB,JOHN WILEY AND SONS, CHICHESTER, Bd. 5, Nr. 12, 1. Dezember 1994 (1994-12-01), Seiten 824-828, XP000485330 ISSN: 1042-7147
- SWALI V ET AL: "SOLID-PHASE DENDRIMER SYNTHESIS AND THE GENERATION OF SUPER-HIGH-LOADING RESIN BEADS FOR COMBINATORIAL CHEMISTRY" JOURNAL OF ORGANIC CHEMISTRY,AMERICAN CHEMICAL SOCIETY. EASTON,US, Bd. 62, Nr. 15, 1997, Seiten 4902-4903, XP000901550 ISSN: 0022-3263
- KEVIN BURGESS ET AL: "Solid phase syntheses of Oligoureas" JOURNAL OF THE AMERICAN CHEMICAL SOCIETY,US,AMERICAN CHEMICAL SOCIETY, WASHINGTON, DC, Bd. 119, Nr. 7, 19. Februar 1997 (1997-02-19), Seiten 1556-1564, XP002115550 ISSN: 0002-7863
- M BEIER ET AL: "Versatile derivatisation of solid support media for covalent bonding on DNA-microchips" NUCLEIC ACIDS RESEARCH,OXFORD UNIVERSITY PRESS, SURREY,GB, Bd. 27, Nr. 9, 1999, Seiten 1970-1977, XP002145887 ISSN: 0305-1048

## Beschreibung

Die vorliegende Erfindung betrifft ein Verfahren zur Oberflächenmodifizierung von Trägermaterialien sowie die Verwendung eines derart hergestellten Trägers.

Die Anbindung von Biopolymeren, insbesondere Nukleinsäuren, an feste Trägeroberflächen wird bis heute im allgemeinen durch folgende Alternativen erreicht:
1) Aufbringen von Biopolymeren (z.B. Nukleinsäuren) auf Oberflächen: Hier finden vor allem poly-L-Lysin gecoatete Glasträger und Nylon-Membranen Verwendung. Dabei werden die Biopolymere durch Ladung an den Träger gebunden. Nachteilig bei der Verwendung poly-L-Lysin gecoateter Glasträger ist, daß keine kovalente Anknüpfung zwischen der beschichteten Oberfläche und dem Biopolymer stattfindet. Der Träger kann nur einmalig verwendet werden. Weiter gibt es so gut wie keine Möglichkeiten zur Optimierung des Abstandes zwischen Biopolymer und Träger. Nachteilig bei der Verwendung von Nylonmembranen ist, daß die Biopolymere größtenteils auch nur durch Ladung gebunden werden. Der Träger kann zwar mehrmalig verwendet werden, aber es ist auch keine Optimierung des Abstandes zwischen Biopolymer und Träger möglich.
2) In-situ Aufbau von Biopolymere (z.B. Nukleinsäuren) auf Oberflächen: Hier finden gebräuchliche Linkersysteme, die von der Biopolymersynthese an porösen CPG-Materialien herrühren, Verwendung. Bei den verwendeten Linker-Molekülen handelt es sich meist um Polyethylenglykol, insbesondere Tetra- oder Hexaethylenglykol. Die Linkermoleküle werden üblicherweise durch kostenintensive Reagenzien analog der Phosphoramidit-Chemie aufgebracht. Es kann leider keine Massenherstellung stattfinden und das Aufbringen von Ladungen ist nicht möglich.

Weiter haben diese Verfahren alle den Nachteil, daß es ihnen an Flexibilität mangelt, und die Biopolymere können auf der Oberfläche nur in einer sehr begrenzten Anzahl aufgebracht werden.

Tsubokawa et al. (Reactive and Functional Polymers, Bd. 37, Nr. 1-3, S. 75-82 (1998) beschreiben die Derivatisierung von Siliciumdioxid-Oberflächen. Hierzu wird die oberflächengebundene NH₂-Funktion mit der Vinylfunktion eines Acrylsäurederivates in einer Michael-Additionsreaktion umgesetzt und dann im zweiten Schritt die Esterfunktion mit einem weiteren Amin reagiert. Als Amin wird ausschließlich Ethylendiamin verwendet.

US-A-5,624,711 beschreibt ein Verfahren zur Derivatisierung von Festphasenoberflächen und Verfahren zur Oligomersynthese. Es werden aber keine Dendrimer-Strukturen erzeugt, sondern es wird eine einfache Oberflächenmodifikation erreicht.

Swali et al. (J. of Organic Chemistry, Bd. 62, S. 4902-4903 (1997) beschreiben die Herstellung hochbeladungsfähiger Harzkügelchen für die kombinatorische Chemie. Die Reaktionsfolge ist, soweit überhaupt entnehmbar, analog zu der in Tsubokawa et al.

Die Aufgabe der vorliegenden Erfindung besteht nun darin, ein Verfahren bereitzustellen, das eine optimale Anbindung von einer großen Anzahl Biopolymeren an Trägeroberflächen erlaubt. Die Aufgabe besteht weiter darin, eine derart hergestellte Trageroberfläche bereitzustellen, deren Bindungskapazität auf ein Vielfaches durch Durchführen einer Oberflächenmodifikation gesteigert worden ist.

Diese Aufgaben werden durch die Gegenstände der Patentansprüche gelöst.

Dem erfindungsgemäßen Verfahren liegen bevorzugt folgende Synthese-Prinzipien zugrunde: 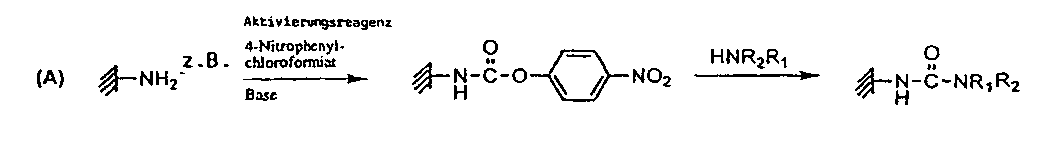 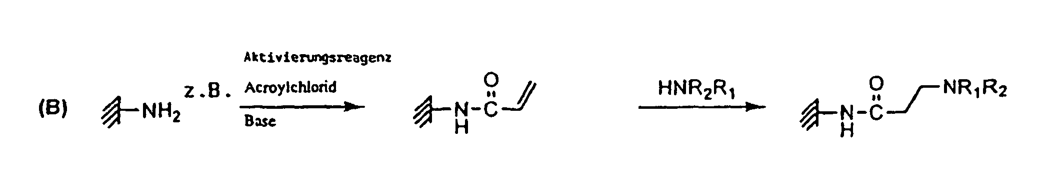 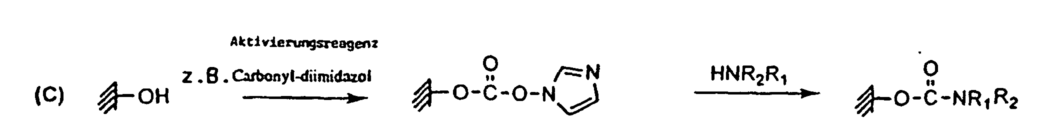 wobei R₁ und R₂ gleich oder verschieden sein können. Die Bedeutungen von R₁ und R₂ unterliegen keiner Beschränkung und können H oder jeglicher organischer Rest sein (z.B. ein gerader oder verzweigter Alkylrest mit 1-30 Kohlenstoffatomen, ein gerader oder verzweigter Alkenylrest mit 2 bis 30 Kohlenstoffatomen, ein mono- oder polyzyklischer Alkylrest mit 3 bis 30 Kohlenstoffatomen oder ein mono- oder polyzyklischer Alkenylrest mit 4 bis 30 Kohlenstoffatomen oder einen mono- oder polyzyklischen Rest mit 6 bis 30 Kohlenstoffatomen, wobei die Reste ggf. durch einen oder mehrere Substituenten (z.B. OH, Carboxyl, Carbonyl, Phosphat-) substituiert sein können). Die Base kann jegliche basische Verbindung sein, z.B. Diisopropylethylamin.

Es kann jeder beliebige gerade oder verzweigte C₁₋₃₀-Alkylrest verwendet werden. Beispiele hierfür sind Methyl-, Ethyl-, Propyl-, Isopropyl-, Butyl-, Isobutyl-, tert.-Butyl-, n-Butyl-, n-Hexyl-, 2-Methylpentyl-, 2,3-Dimethylbutyl-, n-Heptyl-, 2-Methylhexyl-, 2,2-Dimethylpentyl-, 3,3-Dimethylpentyl-, 3-Ethylpentyl-, n-Octyl-, 2,2-Dimethylhexyl-, 3,3-Dimethylhexyl-, 3-Methyl-3-ethylpentylgruppen. Bevorzugt sind kurze Alkylketten, wie Methyl-, Ethyl-, Propyl- und Isopropyl-.

Es kann jeder beliebige gerade oder verzweigte C₂₋₃₀-Alkenylrest verwendet werden. Beispiele hierfür sind Vinyl-, Propenyl-, Isopropenyl-, Allyl-, 2-Methylallyl-, Butenyl- oder Isobutenyl-, Hexenyl- oder Isohexenyl-, Heptenyl- oder Isoheptenyl-, Octenyl- oder Isooctenylgruppen. Bevorzugt sind Vinyl-, Propenyl- und Isopropenyl-.

Der Cycloalkylrest mit 3 bis 30 Kohlenstoffatomen kann jeder beliebige Cycloalkylrest sein. Beispiele hierfür sind eine Cyclopropyl-, Cyclobutyl-, Cyclopentyl- oder Cyclohexyl-, Cycloheptyl-, Cxclooctyl-, Cyclononyl- oder Cyclodecylgruppen. Bevorzugt sind Cyclopropyl-, Cyclobutyl-, Cyclopentyl- und Cyclohexyl-.

Der Cycloalkenylrest mit 4 bis 30 Kohlenstoffatomen kann jeder beliebige Cycloalkenylrest sein. Beispiele hierfür sind eine Cyclobutenyl-, Cyclopentenyl- oder Cyclohexenyl-, Cycloheptenyl-, Cxclooctenyl-, Cyclononenyl- oder Cyclodecenylgruppen. Bevorzugt sind Cyclobutenyl-, Cyclopentenyl- oder Cyclohexenyl.

Beispiele für polyzyklische Alkyl- bzw. Alkenylreste umfassen Norbornan, Adamantan oder Benzvalen.

R₁ und R₂ können ferner beliebige mono- oder polycyclische C6-30- Arylreste sein. Beispiele hierfür sind ein carbocyclischer, monocyclischer Rest, beispielsweise die Phenylgruppe, ein heterocyclischer, monocyclischer Rest, beispielsweise die Gruppen Thienyl, Furyl, Pyranyl, Pyrrolyl, Imidazolyl, Pyrazolyl, Pyridyl, Pyrazinyl, Pyrimidinyl, Pyrazinyl, Thiazolyl, Oxazolyl, Furazannyl, Pyrrolinyl, Imidazolinyl, Pyrazolinyl, Thiazolinyl, Triazolyl, Tetrazolyl, sowie die Positionsisomeren des oder der Heteroatome, die diese Gruppen umfassen können.

Durch das erfindungsgemäße Verfahren entstehen an der Trägeroberfläche mehr oder weniger vernetzte Linkersysteme, die die Anbindung einer ggf. großen Anzahl von Biopolymeren an die Trägeroberfläche erlauben. Bevorzugte Biopolymere sind DNA, RNA, Nucleinsäureanaloga; Peptide, Proteine, Antikörper etc.

Erfindungsgemäß soll unter einer funktionellen Gruppe eine auf einer Trägeroberfläche befindliche chemische Gruppierung, wie z.B. eine Amino-Gruppe, Hydroxyl-Gruppe, Carboxyl-Gruppe, Carbonyl-Gruppe, Thiol-, Amid- oder Phosphat-Gruppe verstanden werden.

Erfindungsgemäß ist jegliche(r) auf diesem Gebiet übliche Träger bzw. Matrix einsetzbar. Dies sind insbesondere Glas, Folien bzw. Membranen aus Polypropylen, Nylon, Cellulose, Cellulosederivate (z.B. Celluloseacetat, Cellulose-Mischester), Polyethersulfonen, Polyamiden, Polyvinylchlorid, Polyvinylidenfluorid, Polyester, Teflon oder Polyethylen.

Erfindungsgemäß soll unter einem Aktivierungsreagenz ein Reagenz verstanden werden, das auf der Trägeroberfläche befindliche funktionelle Gruppen in einen ankopplungsbereiten Zustand versetzt. Erfindungsgemäß eingesetzte Artivierungsreagenzien sind 4-Nitrophenyl-Chloroformiat (= Chlorameisensäure-4-nitrophenylester), Carbonyldiimidazol, Acryloylchlorid (Acrylsäurechlorid), Phenylchloroformiat, Phosgen, Diphosgen, Triphosgen, EDC (N-(3-dimethylaminopropyl)-N'-ethyl-carbodiimid-hydrochlorid) , N,N'-Diisopropyl-carbodiimid, Dicylohexyl-carbodiimid, Disuccinimidyl-carbonat, Disuccinimidyl-oxalat, Dimethylsuberimidatdihydrochlorid oder Phenylendiisothiocyanat, wobei die drei erstgenannten am bevorzugtesten sind.

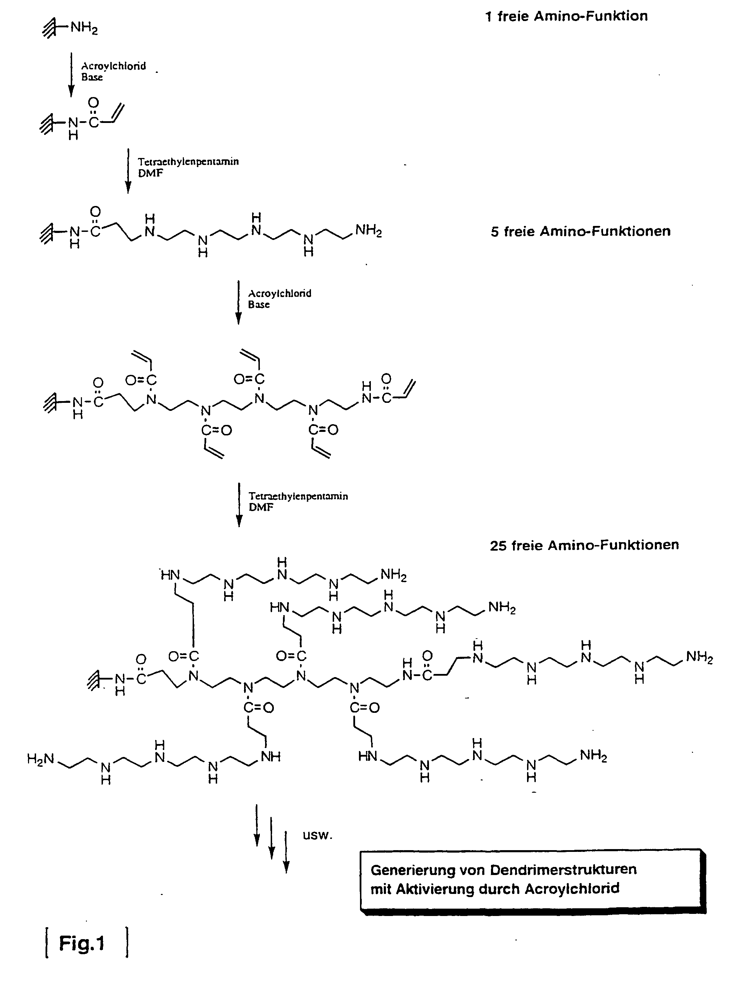

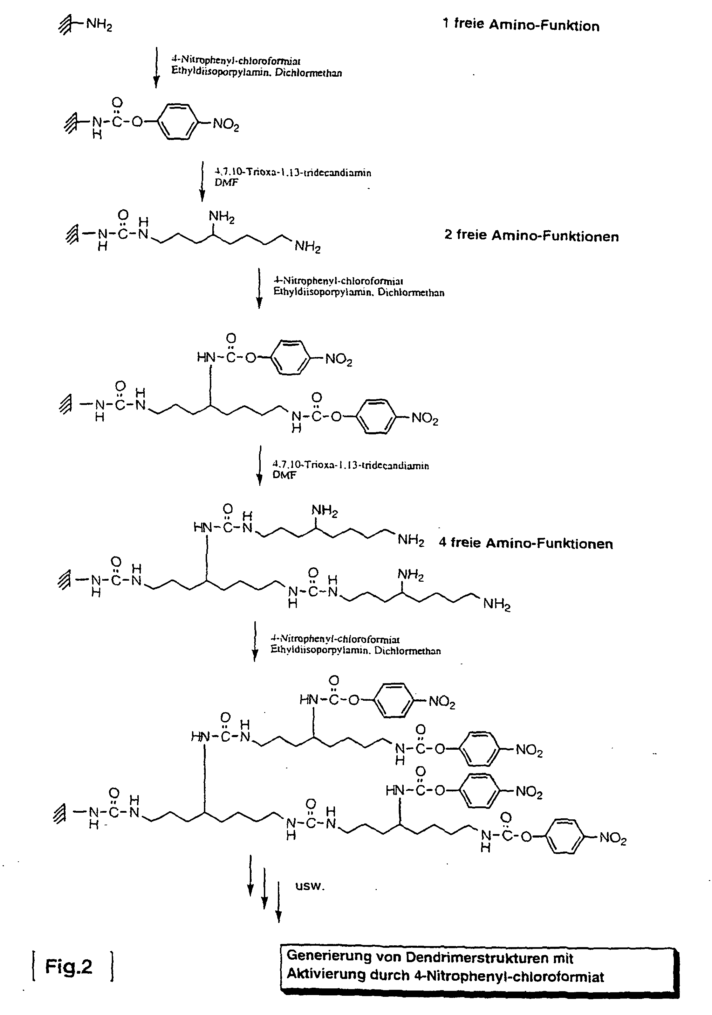

Erfindungsgemäß sollen unter einer Amin-Komponente Polyamine mit mehr als zwei Amino-Funktionen verstanden werden. Bevorzugte Polyamine sind Tetraethylenpentamin, Spermin, Spermidin, 4,7,10-Trioxa-1.13-tridecandiamin oder 4-Aminomethyl-1,8-octandiamin. Durch den Einbau von Aminen können bevorzugt positive Ladungen in das Linkersystem implementiert werden, da diese im physiologischen Bereich protoniert vorliegen. Durch die Wahl des entsprechenden Amins läßt sich der Grad der Ladung der Oberfläche steuern. Postive Ladungen ihrerseits bewirken eine leichtere Annäherung von negativ geladenen Biopolymeren (z.B. Nukleinsäuren) und erleichtern dadurch Hybridisierungen auf den erfindungsgemäß behandelten Trägeroberflächen. Bei der verwendung von Polyaminen mit mehr als 2 Amino-Funktionen kann die Kettenlänge, d.h. die Länge des Linker-Systems, durch die Länge des Amins und die Anzahl des wiederholten Durchlaufens der nachfolgend angegebenen Synthese-Prinzipien gesteuert werden. Durch die Wahl des Amins kann der individuelle Charakter des Linker-Systems gesteuert werden, d.h. ob es eher hydrophob oder hydrophil ist. Durch die Wahl des Amins können neben Amingrupperierungen natürlich auch andere funktionelle Gruppen (z.B. Hydroxyl-, Phosphat-, Carboxyl-, Carbonyl-) auf der Oberfläche präsentiert werden. So ist es beispielsweise für die Einführung eines OH-Gruppen tragenden Linkers vorteilhaft die Umsetzung mit einem Aminalkohol durchzuführen. Bei Verwendung eines bifunktionellen Amins erfolgt eine lineare Verlängerung der Kette. Durch polyfunktionelle Amin-Reagentien werden in das Linkersystem Verzweigungen eingebaut. Dadurch werden sogenannte Dendrimer-Strukturen aufgebaut (s. Fig. 1 und 2). Unter einer Dendrimer-Struktur soll erfindungsgemäß verstanden werden, daß von einem definierten Startpunkt ausgehende mehr als einmal verzweigte Strukturen entstehen. Dies hat vor allem den Vorteil, daß bei Trägermaterialien mit ansonsten geringer Beladungskapazität (z.B. Glas) die Beladung gezielt erhöht werden kann und somit größere Mengen an Biopolymeren aufgebracht werden können. So können bei der Verwendung von polyfunktionellen Aminen (m = Anzahl der Amino-Funktionen) nach n Runden (1 Runde = Zyklus aus Aktivierung und Umsetzung mit Amin) x Positionen (Funktionen) für eine Anbindung von Biopolymeren genutzt werden:
- x = (m-1)ⁿ: (im Falle der Aktivierung mit 4-Nitrophenyl-Chloroformiat oder Carbonyldiimidazol)
- x = mⁿ: (im Falle der Aktivierung mit Acryloylchlorid)

### Rechenbeispiel: Tetraethylenpentamin (m = 5), 3 Runden (n = 3), Acryloylchlorid als Aktivierungsmittel ----> 5³ = 125, d.h. 125-fache Beladungskapazität des Trägers

Um auf der Trägeroberfläche zu einem mehr oder weniger vernetzten Linkersystem zu kommen, werden die obigen Reaktionen gezielt wiederholt. Hierdurch wird der Abstand zwischen Trägermaterial und dem anzubindenden Biopolymer gesteuert und auch die physikalischen Eigenschaften des Linkers bestimmt. Durch das erfindungsgemäße Verfahren wird ein flexibles Linkersystem geschaffen. Flexibel insofern, daß für jegliche Anwendung (z.B. Anbindung von DNA, RNA, Proteine, Antikörper) ideal vorbereitete Trägeroberflächen zur Verfügung gestellt werden. Insbesondere eignet sich das erfindungsgemäße Verfahren dazu, für die DNA-/Bio-Chip-Technologie geeignete Oberflächen (Träger) bereitzustellen. Der Grad der positiven Ladung auf der Oberfläche läßt sich durch die Anzahl der protonierbaren Amin-Funktionen, vor allem durch den Einbau von Polyaminen, steuern. So wird das Ziel der Erhöhung der Beladungsdichte vorzugsweise durch den Einbau von Verzweigungsstellen (z.B. Polyaminen) realisiert; die Erhöhung der positiven Oberflächenladung kann beispielsweise durch den Einbau protonierbarer Amino-Funktionen geschehen; die Variation der Distanz zwischen Biomolekül und Oberfläche kann durch die Verwendung Amine verschiedener Kettenlänge gesteuert werden.

Das erfindungsgemäße Verfahren zur Oberflächenmodifizierung zeichnet sich durch folgende Schritte aus. Die zu derivatisierenden Trägermaterialien werden in einem Reaktionsgefäß mit 5-100 ml (je nach Größe), bevorzugt 10-30 ml, ganz bevorzugt 20 ml, wasserfreiem Lösungsmittel (z.B. Dichlorethan, Tetrachlorkohlenstoff, THF, DMF, DMSO, HMPT (=HMPA), Dichlorethan, Acetonitril) mit ca. 0,5 bis 5 mmol, bevorzugt 1-3 mmol, ganz bevorzugt 1 mmol, Aktivierungsreagenz (z.B. Acryloylchlorid, 4-Nitrophenylchloroformiat, Carbonyldiimidazol) versetzt. Die Umsetzung wird im Falle von Acryloylchlorid und 4-Nitrophenyl-chloroformiat durch Zugabe von ca. 0,5 bis 5 mmol, bevorzugt 1-3 mmol, ganz bevorzugt 1 mmol, Diisopropylethylamin (oder einer anderen nicht nukleophilen Base, wie Triethylamin, Pyridin, Collidin, Lutidin oder Triisopropylamin) gestartet. Nach 1 bis 4 Stunden, bevorzugt 2 Stunden, Schwenken auf einem Schüttler werden die Träger gründlich mit einem wasserfreien Lösungsmittel (z.B. Dichlorethan, Tetrachlorkohlenstoff, etc.) gewaschen und trocknen gelassen, vorzugsweise mit Stickstoff trockengeblasen. Zur Überprüfung der Reaktion wird eine Qualitätskontrolle durchgeführt. Beispielsweise wird das nachfolgend erwähnte aminierte PP-Kontrollstück dem nachfolgend beschriebenen Bromphenolblau-Test unterzogen. Ist keine Blaufärbung im Vergleich zu einer nicht umgesetzten Probe zu erkennen, ist die Aktivierung erfolgreich verlaufen. Tritt eine Blaufärbung auf, wird die Umsetzung wiederholt. Die nun aktivierten Trägermaterialien werden in ca. 5-100 ml (je nach Größe), bevorzugt 10-50 ml, ganz bevorzugt 20 ml eines amin- und wasserfreien Lösungsmittels (z.B. DMF, Acetonitril, THF, DMSO, HMPT (HMPA) oder Dichlormethan) mit ca. 0,5-5 mmol, bevorzugt 1-3 mmol, bevorzugt 1 mmol, Amin-Komponente versetzt und ca. 5 - 20 Stunden, bevorzugt über Nacht, geschwenkt. Man wäscht gründlich, z.B. nacheinander mit DMF, Methanol und Dichlorethan, und läßt die nun derivatisierten Träger trocknen bzw. bläst vorzugsweise mit Stickstoff trocken. Im Falle von mit Acryloylchlorid aktivierten Trägern empfiehlt sich eine auf 1,5 bis 2,5 Tage, bevorzugt 2 Tage, verlängerte Reaktionsieit. Zur Überprüfung der Reaktion wird eine Qualitätskontrolle durchgeführt, beispielsweise wird das nachfolgend erwähnte PP-Kontrollstück dem nachfolgend beschriebenen Bromophenolblau-Test unterzogen. Ist die Blaufärbung im Vergleich zu einer aktivierten Probe des letzten Schritts zu erkennen, ist die Umsetzung erfolgreich verlaufen. Bei keiner oder sehr schwacher Blaufärbung wird die Umsetzung wiederholt. Die nun einmal derivatisierten Träger können bereits so verwendet werden oder noch ein- oder mehrmals dem beschriebenen Zyklus unterzogen werden.

Zur Qualitätsüberprüfung der Trägerderivatisierung eignet sich beispielsweise ein Verfahren basierend auf der Blaufärbung von Aminofunktionen durch Bromphenolblau, d.h. die Detektion erfolgt über das Verschwinden bzw. Vorhandensein der Blaufärbung bei Aktivierung bzw. Umsetzung mit Aminen. Dazu wird jedem Reaktionsgefäß zusätzlich zu den zu derivatisierenden Trägermaterialien ein Stück aminierte Polypropylen-Folie (PP-Kontrollstück) beigefügt, an der stellvertretend für alle in dem Reaktionsgefäß befindlichen Trägermatierialien der Erfolg des jeweiligen Reaktionsschritts überprüft wird. Hierzu wird nach jeder Reaktion ein Stück des Kontrollstreifens entnommen und 2 Minuten in einer 1% Bromphenolblau-Lösung in aminfreiem DMF geschwenkt und dann mit Ethanol gewaschen. Amino-Funktionen und andere basische Gruppen ergeben hierbei eine intensive adsorptive Blaufärbung. Nach der Durchführung der Aktivierungsreaktionen (z.B. mit Acryloylchlorid, 4-Nitrophenylchloroformiat, Carbonyldiimidazol) wird auf Verschwinden der Blaufärbung detektiert. Eine Quantifizierung der Oberflächenbeladung ist über UV-Spektroskopie möglich. Hierbei wird die adsorptive Blaufärbung z.B. mit einer 10%-igen Piperidin-Lösung in DMF von Träger abgelöst und UV-spektroskopisch vermessen.

Die Linker an der Trägeroberfläche weisen lineare Strukturen oder Dendrimer-Strukturen auf. Die Strukturen haben folgenden Aufbau:
- bevorzugte Struktur nach Aktivierung mit Acryloylchlorid 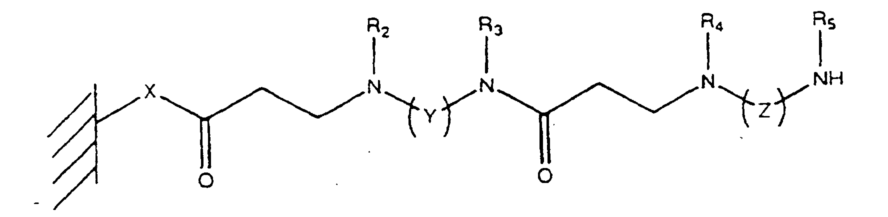
   - X =: O, NHR₁
   - Y, Z =: können gleich oder verschieden sein und können ausgewählt sein aus
   -(CH₂)ₙ-
   -(CH₂CH₂O)ₙ-CH₂CH₂
   -(CH₂CH₂CH₂O)ₙ-CH₂CH₂CH₂- usw.
   - R₁-R₅ =: können gleich oder verschieden sein analog R₁ und R₂ vorstehend
   - n =: 1-50, bevorzugt 1-20, ganz bevorzugt 1-10
   oder
- bevorzugte Struktur nach Aktivierung mit Chlorameisensäure-nitrophenylester bzw. Carbonyldiimidazol 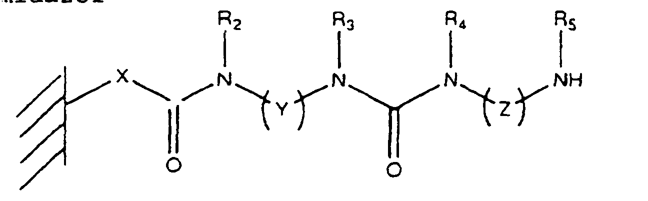
   - X =: O, NHR₁
   - Y, Z =: können gleich oder verschieden sein und können ausgewählt sein aus
   -(CH₂)ₙ-
   -(CH₂CH₂O)ₙ-CH₂CH₂
   -(CH₂CH₂CH₂O)ₙ-CH₂CH₂CH₂- usw.
   - R₁-R₅ =: können gleich oder verschieden sein analog R₁ und R₂ vorstehend
   - n =: 1-50, bevorzugt 1-20, ganz bevorzugt 1-10

Bei der Fixierung von Biopolymeren an die mit dem Linkersystem derivatisierten Trägeroberfläche können prinzipiell 2 Fälle (a) und (b) unterschieden werden :

### (a) In situ-Synthese von Biopolymeren (am Beispiel der Oligonukleotidsynthese) :

Die derivatisierten Träger-Oberflächen mit endständigen Amino- oder Hydroxyl-Funktionen bedürfen keiner weiteren Modifizierung zur Anbindung des 1. Oligonucleotidbausteins nach der Phosphoramidit- oder auch Phosphortriester-Methode. Es werden nach der Reaktion-des 1. Nucleotid-Reagenzes mit der aminierten Oberfläche Bindungen vom Phosphoramidat-Typ erzeugt. Hydroxylierte Oberflächen führen zu Bindungen vom Phosphodiester-Typ.

### Phosphoramidit-Methode :

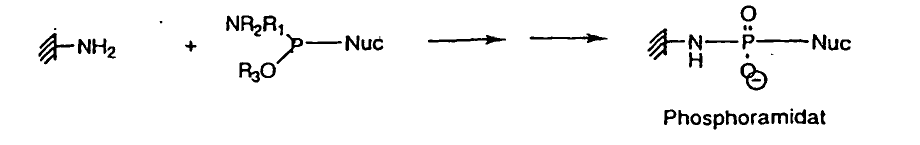

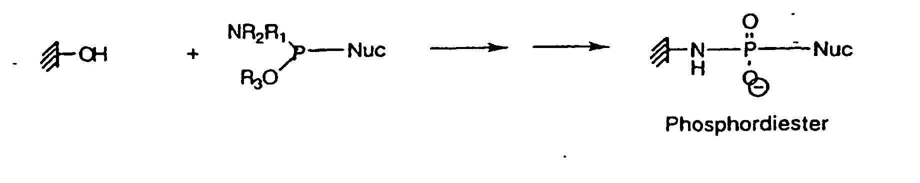

### Phosphortriester-Methode :

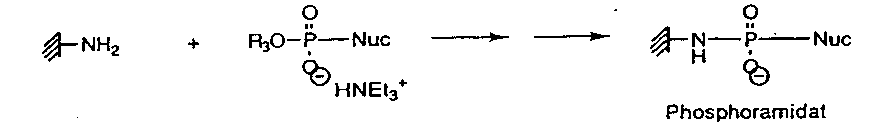

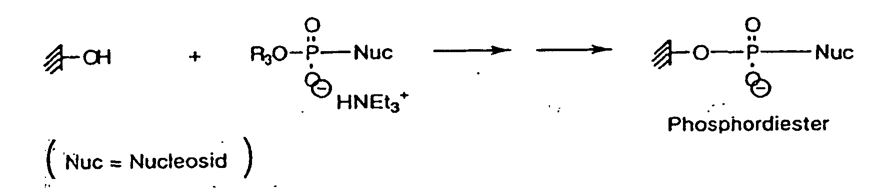

R₁ - R₃ = analog R₁ und R₂ vorstehend

Werden Bindungen vom Phosphodiester-Typ angestrebt, genügt es beim letzten Schritt innerhalb der Linker-System-Synthese einen Amino-Alkohol zur Reaktion zu bringen.

### (b) Anbindung von "vorgefertigten" Biopolymeren:

Die Anbindung des Biopolymeren sieht entweder die Generierung einer kovalenten (dauerhaften) chemischen Verknüpfung des Biomoleküls mit der Trägeroberfläche oder auch eine dauerhafte Verknüpfung über elektrostatische Wechselwirkung vor. Bei ersterer Möglichkeit muß eine chemische Bindung zwischen dem Biomolekül und der Oberfläche erzeugt werden. Um diese Bindung zu erzeugen, kommt beispielsweise folgendes Vorgehen in Frage:
- (A) Zugabe eines Förderungsmittels
- (B) Aktivierung einer der beiden Reaktanden (Biomolekül oder Oberfläche). Allerdings ist eine Aktivierung der Trägeroberfläche gegenüber einer Aktivierung des Biomoleküls vorzuziehen, da bei der Aktivierung des Biomoleküls selbst unerwünschte Kreuzreaktionen zwischen den aktivierten Biomolekülen - aufgrund des meist poly-funktionellen Charakters des Biomoleküls - nicht auszuschliessen sind. Diese Aktivierung der Oberfläche erfolgt vorzugsweise mittels Crosslinker.

Bei der Anbindung des Biopolymeren durch elektrostatische Wechselwirkung läßt die positive Ladung, welche durch das beschriebene Linker-System unter Verwendung von Aminen erzeugten dendrimeren Oberflächen entsteht, insbesondere durch die Inkorporation der Amine erzeugt wird, eine permanente Immobilisierung von negativ geladenen Biopolymeren (z.B. Nukleinsäuren) zu. Hierzu ist keine weitere Aktivierung der Oberfläche notwendig. Das Biopolymer wird erfindungsgemäß direkt auf die dendrimere, Oberfläche aufgebracht und wird dauerhaft fixiert. Die Eigenschaften zur dauerhaften Immobilisierung von Biopolymeren durch elektrostatische Wechselwirkung wird erfindungsgemäß nach dadurch gesteigert, daß die dendrimere Oberfläche vorher noch alkyliert, z.B. methyliert, wird.

### (A) Anbindung des Biopolymeren unter Zuhilfenahme eines Förderungsmittels

Die Möglichkeit ein Förderungsmittel (Katalysator) zur Erzeugung der kovalenten Bindung zwischen Oberfläche und Biomolekül zu benutzen, stellt im wesentlichen eine 3-Komponenten-Reaktion dar. Werden wie in der vorliegenden Erfindung Möglichkeiten angestrebt, die es erlauben sollen, hochparallel eine grosse Anzahl von Biopolymeren an exakt vorbestimmten Positionen auf einem Träger zu fixieren, kann dies aufgrund von Kreuz-Kontamination nur erschwert mit einem 3-Komponenten-System an ebenen Oberflächen (Folien, Glas o.ä.) gelingen. Daher stellt die Förderungsmittel-Methode einen Spezial-Fall zur kovalenten Anknüpfung von Biopolymeren auf Oberflächen vom Membran-Typ dar. Einzig hier kann das Förderungsmittel in den Poren der Membran lokal dem zu bindenden Biomolekül zur Verfügung gestellt werden, ohne daß mit Kreuz-Kontamination zu rechnen ist (vgl. Beispiel 4). Als Förderungsmittelmittel eignen sich beispielsweise Reagentien vom Carbodiimid-Typ, wie Diisopropylcarbodiimid, EDC oder DCC (Dicyclohexylcarbodiimid). Desweiteren sollten die endständigen Gruppen auf dem Träger und am Biomolekül bevorzugt orthogonal zueinander sein, d.h. diese sollten sinnvoll eine chemische Bindung eingehen können. Hierbei ergeben sich vorzugsweise folgende Kombinationen der zu reagierenden Endgruppen:

| Träger-Oberfläche | Biomolekül | resultierender Bindungs-Typ |
|---|---|---|
| Amino (-NHR) | Carboxy (-COOH) | Amid-Bindung |
| Amino (-NHR) | Phosphat (-PO₄²⁻) | Phosporamidat |
| Hydroxyl (-OH) | Carboxy (-COOH) | Ester |
| Hydroxyl (-OH) | Phosphat (-PO₄²⁻) | Phosphordiester |
| Carboxy (-COOH) | Amino (-NHR) | Amid-Bindung |
| Carboxy (-COOH) | Hydroxyl (-OH) | Ester |
| Phosphat (-PO₄²⁻) | Amino (-NHR) | Phosporamidat |
| Phosphat (-PO₄²⁻) | Hydroxyl (-OH) | Phosphordiester |

Da die reaktiven Gruppen (Amin-, Hydroxyl-, Phosphat- oder Carboxyl-) mehr oder weniger vom Biomolekül vorgegeben sind, empfiehlt es sich daher für jeden Biomolekül-Typ einen entsprechenden orthogonalen Oberflächen-Typ zur Verfügung zu haben. Um die Träger-Oberflächen-Derivatisierung mit dem Linkersystem für alle oben aufgeführten Kombination von Endgruppen verfügbar zu machen, wurden Methoden zur Um-Derivatisierung der Oberfläche von endständigen Amino-Funktionen (oder auch Hydroxyl) auf endständige Hydroxyl-, Carboxyl- und Phosphat-Gruppen entwickelt (vgl. Beispiele 5, 6, 7).

### Um-Derivatisierung auf End-Hydroxyl :

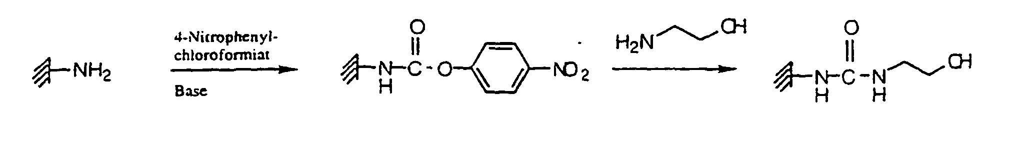

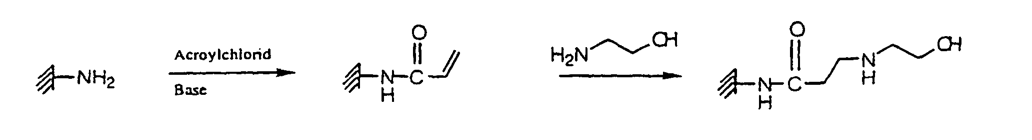

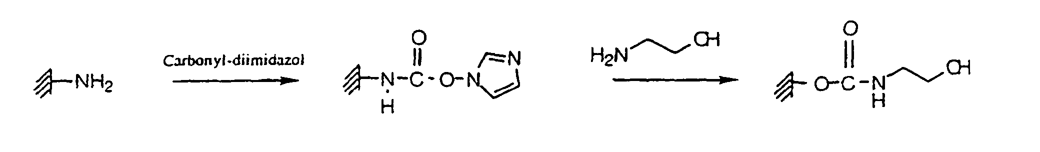

### Um-Derivatisierung auf End-Carboxyl :

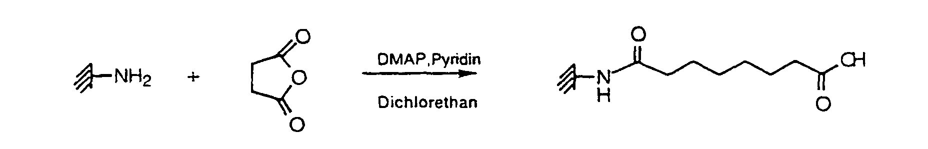

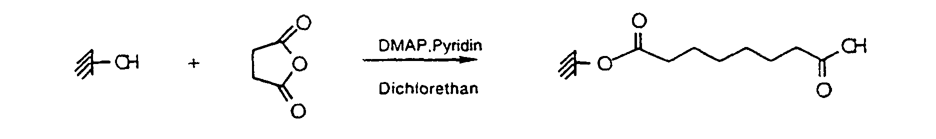

### Um-Derivatisierung auf End-Phosphat :

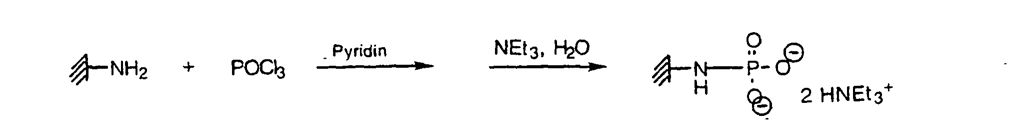

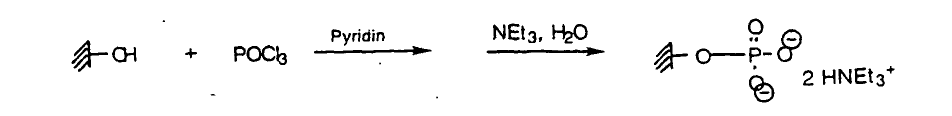

### (B) Anbindung des Biopolymeren mittels Crosslinker

Unter einer kovalenten Oberflächen-Aktivierung ist eine solche zu verstehen, bei der Crosslinker quasi als End-Gruppe auf das erfindungsgemäß vorher aufgebaute Linker-System (Flexible Linker-System) aufgepropft wurden. Bei diesen handelt es sich vor allem um aktivierte Ester-, Aldehyd-, Imidoester- oder Isothiocyanat-Funktionen, die in der Lage sind, ohne weitere chemische Eingriffe, mit in wässrigen Systemen gelösten Biopolymeren eine kovalente Bindung einzugehen. Als Reagentien der Wahl sind hier v.a. Dissuccinimidyl- carbonat, Dissuccinimidyl-oxalat, Glutaraldehyd, Dimethylsuberimidat-Dihydrochlorid oder Phenylendiisothiocyanat zu nennen. Die Umsetzung erfolgt bevorzugt unter basischen Bedingungen, d.h. unter Zusatz von Diisopropylethylamin oder NaCO₃.

### Prinzip:

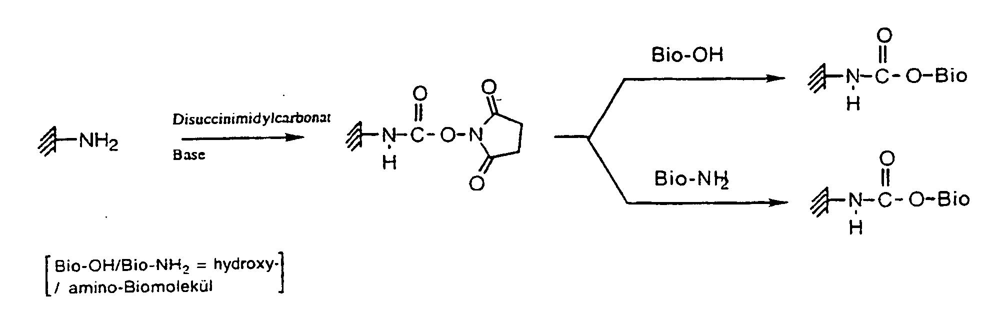

Die Erfindung wird weiter anhand der Figuren beschrieben, welche zeigen:
- Fig. 1:: Generierung von Dendrimerstrukturen nach Aktivierung mit Acryloylchlorid
- Fig. 2;: Generierung von Dendrimerstrukturen nach Aktivierung mit 4-Nitrophenylchloroformiat

Die Erfindung wird weiter anhand der Beispiele beschrieben.

### Beispiel 1: Derivatisierung eines Glasträgers

Ausgegangen wird von aminierten Glasträgern (40 x 48 mm), der entweder kommerziell erhältlich ist oder nach den üblichen Methoden der Silanisierung darstellbar ist. Zur Aktivierung der Aminofunktionen werden die aminierten Glasträger in 20 ml wasserfreies Dichlorethan mit 200 mg 4-Nitrophenyl-chloroformiat (1 mmol) und 171 µl Diisopropylethylamin (1 mmol) gelegt und für 2 Stunden auf dem Schüttler geschwenkt. Der BPB-Kontrolltest zeigt keine Blaufärbung. Die Glasträger werden über Nacht in 20 ml amin-freiem DMF mit 223 µl Tetraethylenpentamin (1 mmol) umgesetzt. Der BPB-Kontrolltest zeigt eine Blaufärbung. Zum Starten eines neuen Zyklus' werden die Glasträger in 20 ml wasserfreies Dichlorethan mit 200 mg 4-Nitrophenyl-chloroformiat (1 mmol) und 171 µl Diisopropylethylamin (1 mmol) gelegt und für 2 Stunden auf dem Schüttler geschwenkt. Der BPB-Kontrolltest zeigt keine Blaufärbung. Die Glasträger werden über Nacht in 20 ml amin-freiem DMF mit 140 µl 1,4-Bis(3-aminopropyloxy)-butan (1 mmol) umgesetzt. Der BPB-Test zeigt eine Blaufärbung.

Die so derivatisierten Glasträger verfügen an ihrer Oberfläche jetzt über Linker an die Biopolymere (z.B. Nukleinsäuren) gekoppelt werden können.

### Beispiel 2: Derivatisierung eines Glasträgers

Ausgegangen wird von einem aminierten Glasträger (40 x 48 mm), der entweder kommerziell erhältlich oder nach den üblichen Methoden über Silanisierung darstellbar ist. Zur Aktivierung der Aminofunktionen werden die aminierten Glasträger in 20 ml wasserfreies Dichlorethan mit 81 µl Acryloylchlorid (1 mmol) und 171 µl Diisopropylethylamin (1 mmol) gelegt und für 2 Stunden auf dem Schüttler geschwenkt. Der BPB-Kontrolltest zeigt keine Blaufärbung. Die Glasträger werden über 2 Nächte in 20 ml amin-freiem DMF mit 223 µl Tetraethylenpentamin (1 mmol) umgesetzt. Der BPB-Kontrolltest zeigt eine Blaufärbung. Zum Starten eines neuen Zyklus' werden die Glasträger in 20 ml wasserfreies Dichlorethan mit 81 µl Acryloylchlorid (1 mmol) und 171 µl Diisopropylethylamin (1 mmol) gelegt und für 2 Stunden auf dem Schüttler geschwenkt. Der BPB-Kontrolltest zeigt keine Blaufärbung. Die Glasträger werden über 2 Nächte in 20 ml amin-freiem DMF mit 140 µl 1,4-Bis(3-aminopropoxy)-butan (1 mmol) umgesetzt. Der BPB-Test zeigt eine Blaufärbung.

Die so derivatisierten Glasträger verfügen an ihrer Oberfläche jetzt über Linker an die Biopolymere (z.B. Nukleinsäuren) gekoppelt werden können.

### Beispiel 3: Derivatisierung von Polypropylenmembranen

Ausgegangen wird von einer käuflichen hydrophilisierten Polypropylenmembran (8 x 12 cm). Zur Aktivierung wird die Membran mit 324 µl Acryloylchlorid (4 mmol) und 684 µl Diisopropylethylamin (4 mmol) in 30 ml wasserfreiem Dichlorethan auf dem Rüttler zur Reaktion gebracht. Nach 2 Std. wird von der Reaktionslösung abdekantiert und mehrmals sorgfältig mit Dichlorethan gewaschen und getrocknet. Der Bromphenolblau-Test (BPB-Test) zeigt keine Blaufärbung. Nachfolgend wird die aktivierte Membran 2 Tage mit 892 µl Tetraethylenpentamin (4 mmol) in 30 ml aminfreiem DMF auf dem Rüttler geschwenkt. Dann wird die Reaktionslösung abdekantiert und die Membran mehrmals sorgfältig mit DMF und dann mit Dichlorethan gewaschen und getrocknet. Der Bromphenolblau-Test zeigt Blaufärbung. Zur weiteren Aktivierung wird die nun aminierte Membran erneut mit 324 µl Acryloylchlorid (4 mmol) und 684 µl Diisopropylethylamin (4 mmol) in 30 ml wasserfreiem Dichlorethan auf dem Rüttler zur Reaktion gebracht. Nach 2 Std. wird von der Reaktionslösung dekantiert und mehrmals sorgfältig mit Dichlorethan gewaschen und getrocknet. Der Bromphenolblau-Test (BPB-Test) zeigt keine Blaufärbung. Nachfolgend wird die aktivierte Membran 2 Tage mit 560 µl 1,6-Bis(3-aminopropyloxy)-butan (4 mmol) in 30 mol aminfreiem DMF auf dem Rüttler geschwenkt. Dann wird die Reaktionslösung abdekantiert und die Membran mehrmals sorgfältig mit DMF und dann mit Dichlorethan gewaschen und getrocknet. Der Bromphenolblau-Test (BPB-Test) zeigt Blaufärbung.

### Beispiel 4: Anbindung von Nukleinsäuren auf Polypropylenmembranen

### a) Anbindung unter Zuhilfenahme eines Aktivierungsmittels

Eine gemäß Beispiel 3 derivatisierte Polypropylenmembran (8 x 12 cm) wird auf einem Whatman-Filterpapier 5 Min. mit einer Lösung aus 54 mg N-(3-Dimethylaminopropyl)-N'-ethyl-carbodiimidhydrochlorid und 24 ml N-Methylimidazol in 10 ml Wasser inkubiert. Die Reaktionslösung wird abdekantiert. Die so aktivierte, noch feuchte Polypropylen-Membran kann nun zum kovalenten Aufbringen von Biopolymeren (Nukleinsäuren) verwendet werden. Nach dem Aufbringen der Biopolymere (z.B. durch Spotting-Robotter oder Nano-Plotter) werden die Proben durch 2 hr Inkubieren bei 65 °C auf der Membran fixiert ; anschliessend wird die Membran sorgfältig mit Wasser gewaschen.

### b) Anbindung mittels elektrostatischer Wechselwirkung unter nicht-denaturierenden Bedingungen

Eine analog Beispiel 3 derivatisierte Polypropylenmembran (8x12 cm) wird auf einem Filterpapier mit Wasser befeuchtet. Die feuchte Membran kann direkt nun zum Aufbringen von Biopolymeren verwendet werden. Nach dem Aufbringen der Biopolymere (z.B. mittels eines Spotting-Roboters) werden die Proben durch 2 stündige Inkubation bei 65°C auf der Membran fixiert. Anschließend wird die Membran gründlich mit Wasser gewaschen.

Alternativ können die Biopolymere auch direkt auf eine trockene Membran aufgebracht werden.

### c) Anbindung mittels elektrostatischer Wechselwirkung unter denaturierenden Bedingungen

Eine analog Beispiel 3 derivatisierte Polypropylenmembran (8x12 cm) wird auf einem Filterpapier mit 10 ml Denaturierungspuffer (0,5 M NaOH, 1,5 M NaCl) getränkt. Nach 10 Min. Inkubation wird der Überstand an Denaturierungspuffer abdekantiert. Die noch feuchte Membran kann nun zum Immobilisieren von Biopolymeren verwendet werden. Nach dem Aufbringen der Biopolymere (z.B. mittels Spotting-Roboter) werden die Membranen über Nacht bei Raumtemperatur getrocknet. Anschließend wird die Membran gründlich mit Wasser gewaschen.

### Beispiel 5: Synthese endständiger Hydroxyl-Gruppen

### a) Aktivierung mit Chlorameisensäure-4-nitrophenylester :

Eine amino-funktionalisierte Polypropylen-Membran (Omnitray-Grösse) gemäß Beispiel 3 wird in 30 ml wasserfreiem Dichlorethan mit 400 mg Chlorameisensäure-4-nitrophenylester (2 mmol) und 342 µl Diisopropylethylamin (2 mmol) für 2 hr auf dem Schüttler geschwenkt. Man wäscht 2 x je 5 min mit 50 ml Dichlormethan und trocknet im Stickstoffstrom. Die so aktivierte PP-Membran wird nun mit 200 ml 2-(2-Aminoethoxy)ethanol (2 mmol) in 30 ml aminfreiem DMF 30 min auf dem Schüttler geschwenkt, worauf die Reaktionslösung abdekantiert wird. Nach kurzem Waschem mit DMF wird die PP-Membran erneut mit 200 µl 2-(2-Aminoethoxy)ethanol (2 mmol) in 30 ml aminfreiem DMF versetzt und über Nacht auf dem Schüttler geschwenkt. Von der Reaktionslösung wird abdekantiert, und die PP-Membran 2x je 5 min mit 50 ml DMF und dann 2 x mit 50 ml Aceton gewaschen und getrocknet.

### b) Aktivierung mit Acryloylchlorid :

Eine amino-funktionalisierte Polypropylen-Membran (Omnitray-Grösse) gemäß Beispiel 3 wird in 30 ml wasserfreiem Dichlorethan mit 162 µl Acryloylchlorid (2 mmol) und 342 µl Diisopropylethylamin (2 mmol) für 2 hr auf dem Schüttler geschwenkt. Man wäscht 2 x je 5 min mit 50 ml Dichlormethan und trocknet im Stickstoffstrom. Die so aktivierte PP-Membran wird nun mit 200 µl 2-(2-Aminoethoxy)ethanol (2 mmol) in 30 ml aminfreiem DMF 30 min auf dem Schüttler geschwenkt, worauf die Reaktionslösung abdekantiert wird. Nach kurzem Waschem mit DMF wird die PP-Membran erneut mit 200 µl 2-(2-Aminoethoxy)ethanol (2 mmol) in 30 ml aminfreiem DMF versetzt und über Nacht auf dem Schüttler geschwenkt. Von der Reaktionslösung wird abdekantiert, und die PP-Membran 2x je 5 min mit 50 ml DMF und dann 2 x mit 50 ml Aceton gewaschen und getrocknet.

### Beispiel 6: Synthese endständiger Carboxyl-Gruppen

Eine amino-funktionalisierte Polypropylen-Membran (Omnitray-Grösse) gemäß Beispiel 3 wird in 30 ml trockenem Dichlorethan mit 400 mg Bernsteinsäureanhydrid (4 mmol), 1 ml Pyridin (24 mmol) und 488 mg DMAP (4 mmol) über Nacht auf dem Schüttler zur Reaktion gebracht. Nachfolgend wird die Reaktionslösung abdekantiert und die PP-Membran nacheinander mit 30 ml Dichlormethan, 30 ml Aceton, 30 ml 1 % HCl, 2 x 30 ml Wasser und 2 x mit 30 ml Aceton jeweils 5 min. gewaschen und getrocknet.

### Beispiel 7: Synthese endständiger Phosphat-Gruppen

Unter Eisbadkühlung werden 0.42 ml POCl₃ (4 mmol) in 40 ml trockenem Pyridin gelöst. Nachfolgend werden 828 mg 1,2,4-Triazol (12 mmol) zugefügt. Nach 10 min wird die hydroxyl-funtionalisierte Polypropylen-Membran gemäß Beispiel 4 zugefügt und weitere 10 min unter Eisbadkühlung auf dem Rüttler geschwenkt. Anschliessend wird das Eisbad entfernt und noch 45 min geschwenkt. Die Reaktionslösung wird abdekantiert und vorsichtig mit 50 ml eines Gemisch aus Triethylamin /Dioxan / Wasser hydrolisiert. Man wäscht sorgfältig nacheinander 2 x mit 50 ml Wasser, kurz mit 50 ml 1 % HCl, 2 x mit 50 ml Wasser und 2x 5 min mit 50 ml Aceton und trocknet im Stickstoff-Strom.

### Beispiel 8: Oberflächen-Aktivierung mit Disuccinimidylcarbonat

7 amino-funktionalisierte Glas-Objektträger werden in 30 ml wasserfreiem Acetonitril mit 256 mg Disuccinimidylcarbonat (2 mmol) und 513 µl Diisopropylethylamin (3 mmol) für 4 hr auf dem Schüttler geschwenkt. Man wäscht mit 50 ml Acetonitril, dann mit 50 ml Dichlorethan und trocknet im Stickstoffstrom.

### Beispiel 9: Methylierung eines Glasträgers zur Verbesserung der Eigenschaften für die Immobilisierung von Biomolekülen durch elektrotstatische Wechselwirkung

7 Stück derivatisierte Glasträger (derivatisiert analog Beispiel 2) werden für 1,5 Stunden mit einer Lösung aus 0,125 ml Trifluormethansulfonsäuremethylester (1,1 mmol) in 40 ml Dichlorethan inkubiert. Danach wird gründlich mit Dichlorethan und Aceton gewaschen und die Träger getrocknet.

## Patentansprüche

1. Verfahren zur Oberflächenmodifizierung von Trägermaterialien geeignet zum Einsatz in der DNA-/Bio-Chip-Technologie, wobei auf der Oberfläche der Trägermaterialien mindestens eine funktionelle Gruppe durch Umsetzung mit einem Aktivierungsreagenz aktiviert wird und nachfolgend mit einer Polyamin-Komponente mit mehr als 2 Amino-Funktionen zum Aufbau einer dendrimeren Trägeroberflächen-Struktur umgesetzt wird, wobei das Aktivierungsreagenz Acryloylchlorid, 4-Nitrophenylchloroformiat, Carbonyldiimidazol, Phenylchloroformiat, Phosgen, Diphosgen, Triphosgen, EDC (N-(3-dimethylaminopropyl)-N'-ethyl-carbodiimid-hydrochlorid), N,N'-Diisopropyl-carbodiimid, Dicylohexyl-carbodiimid, Disuccinimidyl-carbonat, Disuccinimidyl-oxalat, Dimethylsuberimidat-Dihydrochlorid oder Phenylendiisothiocyanat ist.

2. Verfahren nach Anspruch 1, wobei die Trägermatrix ausgewählt ist aus Glas, Folien bzw. Membranen aus Polypropylen, Nylon, Cellulose, Cellulosederivate (z.B. Celluloseacetat, Cellulose-Mischester), Polyethersulfonen, Polyamiden, Polyvinylchlorid, Polyvinylidenfluorid, Polyester, Polyethylen oder Teflon.

3. Verfahren nach Anspruch 1 oder 2, wobei die funktionelle Gruppe eine Amin-, Hydroxyl-, Phosphat-, Carboxyl-, Carbonyl-, Thiol- oder Amid-Gruppe ist.

4. Verfahren nach einem der Ansprüche 1 bis 3, wobei das Polyamin Tetraethylenpentamin, Spermin, Spermidin, 4,7,10-Trioxa-1.13-tridecandiamin oder 4-Aminomethyl-1,8-octandiamin ist.

5. Verfahren nach einem der Ansprüche 1 bis 4, wobei die Schritte der Umsetzung mit einem Aktivierungsreagenz und einer Polyamin-Komponente mehrmals durchgeführt werden.

6. Verfahren nach einem der vorhergehenden Ansprüche, wobei es zum gesteuerten Aufbau von positiver Ladung an der Trägeroberfläche kommt.

7. Verfahren nach einem der Ansprüche 1-6, wobei zusätzlich die gemäß einem Ansprüche 1-6 derivatisierte Trägeroberfläche vor dem Anbinden von Biopolymeren aktiviert wird.

8. Verfahren nach Anspruch 7, wobei als Aktivierungsmittel Disuccinimidylcarbonat, Disuccinimidyloxalat, Glutaraldehyd, Dimethylsuberimidat-Dihydrochlorid oder Phenylendiisothiocyanat verwendet wird.

9. Verwendung eines nach einem der Ansprüche 1-6 hergestellten Trägers zur Anbindung von Biopolymeren.

10. Verwendung nach Anspruch 9, wobei die Biopolymere aus DNA, RNA, Nukleotidanaloga, Peptiden, Proteinen oder Antikörpern ausgewählt sind.

## Claims

1. A process for the surface modification of support materials adapted for use in the DNA/biochip technology, wherein at least one functional group is activated on the support material surface by reaction with an activating reagent and is subsequently reacted with a polyamine component having more than 2 amino functions for the synthesis of a dendrimeric support surface structure, wherein the activating reagent is acryloylchloride, 4-nitrophenyl chloroformate, carbonyl diimidazole, phenyl chloroformate, phosgene, disphosgene, triphosgene, EDC (N-(3-dimethylaminopropyl)-N'-ethyl-carbodiimide hydrochloride), N,N'-diisopropyl carbodiimide, dicyclohexyl carbodiimide, disuccinimidyl carbonate, disuccinimidyl oxalate, dimethylsuberimidate dihydrochloride or phenylene diisothiocyanate.

2. The process according to claim 1, wherein the support matrix is selected from the group consisting of glass, sheets or films and membranes made from polypropylene, nylon, cellulose, cellulose derivatives (e.g. cellulose acetate, cellulose mixed ester), polyether sulfones, polyamides, polyvinyl chloride, polyvinylidene fluoride, polyester, polyethylene or Teflon.

3. The process according to claim 1 or 2, wherein the functional group is an amine, hydroxyl, phosphate, carboxyl, carbonyl, thiol or amide group.

4. The process according to any of claims 1 to 3, wherein the polyamine is tetraethylene pentamine, spermine, spermidine, 4,7,10-trioxa-1,13-tridecanediamine or 4-aminomethyl-1,8-octanediamine.

5. The process according to any of claims 1 to 4, wherein the reaction steps with an activating reagent and a polyamine component are carried out several times.

6. The process according to any of the preceding claims, wherein positive charge is built up in controlled manner on the support surface.

7. The process according to any of claims 1 to 6, wherein the support surface derivatized according to any of claims 1 to 6 is additionally activated prior to the attachment of biopolymers.

8. The process according to claim 7, wherein disuccinimidyl carbonate, disuccinimidyl oxalate, glutaraldehyde, dimethylsuberimidate dihydrochloride or phenylene diisothiocyanate are used as activating agent.

9. Use of a support produced according to any of claims 1 to 6 for the attachment of biopolymers.

10. Use according to claim 9, wherein the biopolymers are selected from DNA, RNA, nucleotide analogs, peptides, proteins or antibodies.

## Revendications

1. Procédé pour la modification de la surface de matériaux de support destinés à être employés dans la technologie des puces ADN/Bio, dans lequel, à la surface du matériau de support, au moins un groupe fonctionnel est activé, par transformation avec un réactif d'activation, puis est ensuite transformé par action d'un composant à base de polyamine comportant plus de deux fonctions amine en vue de la réalisation d'une structure de surface de support dendrimère, procédé dans lequel le réactif d'activation consiste en chlorure d'acryloyle, chloroformiate de 4-nitrophényle, carbonyldiimidazole, chloroformiate de phényle, phosgène, diphosgène, triphosgène, EDC [chlorhydrate de N-(3-diméthylaminopropyl)-N'-éthyl-carbodiimide], N,N'-diisopropyl-carbodiimide, dicyclohexyl-carbodiimide, carbonate de disuccinimidyle, oxalate de disuccinimidyle, dichlorhydrate de diméthyl-suberimidate, ou diisothyocyanate de phénylène.

2. Procédé selon la revendication 1, dans lequel la matrice formant le support est choisie dans le groupe comprenant des verres, des feuilles ou des membranes formées de polypropylène, nylon, cellulose, dérivés de cellulose (par exemple acétate de cellulose, ester mixte de cellulose), polyéthersulfones, polyamides, chlorure de polyvinyle, fluorure de polyvinylidène, polyesters, polyéthylènes ou téflon.

3. Procédé selon la revendication 1 ou 2, dans lequel les groupes fonctionnels consistent en des groupes amines, hydroxyles, phosphates, carboxyles, carbonyles, thiols ou amides.

4. Procédé selon une quelconque des revendications 1 à 3, dans lequel la polyamine consiste en tétraéthylènepentamine, spermine, spermidine, 4,7,10-trioxa-1.13-tridécanediamine ou 4-aminoéthyl-1,8-octandiamine.

5. Procédé selon une quelconque des revendications 1 à 4, dans lequel les étapes de transformation sont des étapes successives de réaction avec un réactif d'activation et un composant consistant en polyamine.

6. Procédé selon une quelconque des revendications précédentes, qui consiste en la transformation contrôlée par charge positive sur la surface du support.

7. Procédé selon une quelconque des revendications 1 à 6, dans lequel, en outre, la surface du support traitée selon une quelconque des revendications 1 à 6, est activée préalablement à la liaison avec des biopolymères.

8. Procédé selon la revendication 7, dans lequel, en tant que réactif d'activation, on utilise du carbonate de disuccinimidyle, de l'oxalate de disuccinimidyle, du glutaraldéhyde, du dichlorhydrate de diméthylsubérimidate ou du diisothiocyanate de phénylène.

9. Application d'un support traité selon une quelconque des revendications 1 à 6, en vue de la fixation de biopolymères.

10. Application selon la revendication 9, dans laquelle les biopolymères sont choisis dans le groupe formé par ADN, ARN, analogues de nucléotide, peptides, protéines ou anticorps.
